# EUROPÄISCHE PATENTSCHRIFT

(11) **EP 3 864 309 B1**
(45) Veröffentlichungstag und Bekanntmachung des Hinweises auf die Patenterteilung: **14.12.2022**
(21) Anmeldenummer: 19786545.4
(22) Anmeldetag: 08.10.2019
(51) Int. Cl.: F16C 17/24, F16C 33/20, F16C 41/00, G01M 13/04, F16C 29/00, F16C 29/02

(54) **KUNSTSTOFF-GLEITELEMENT MIT SENSORFUNKTION, INSBESONDERE MIT VERSCHLEISSERKENNUNG**
PLASTIC SLIDING ELEMENT WITH SENSOR FUNCTION, ESPECIALLY WITH WEAR DETECTION
ÉLÉMENT GLISSANT EN PLASTIQUE AVEC FONCTION DE CAPTEUR, NOTAMMENT AVEC DÉTECTION D'USURE

(30) Priorität: 08.10.2018 DE 202018105755 U; 28.03.2019 DE 202019101776 U
(43) Veröffentlichungstag der Anmeldung: 18.08.2021
(73) Patentinhaber: Igus GmbH, 51147 Köln (DE)
(72) Erfinder: NIERMANN, Stefan, 40882 Ratingen (DE); LOOCKMANN-RITTICH, Stefan, 52379 Langerwehe-Pier (DE)
(74) Vertreter: Lippert Stachow Patentanwälte Rechtsanwälte
(86) Internationale Anmeldenummer: PCT/EP2019/077257
(87) Internationale Veröffentlichungsnummer: WO 2020/074536

(56) Entgegenhaltungen:
- DE-A1-102017 106 235
- JP-A- 2015 105 630
- US-A1- 2016 208 849

## Beschreibung

Die Erfindung betrifft allgemein ein Kunststoff-Gleitelement mit integrierter Sensorfunktion, das zur Verwendung in Gleitlagern (Engl. plain bearing) beliebiger Bauart geeignet ist. Die Erfindung betrifft insbesondere ein Kunststoff-Gleitelement zur schmiermittelfreien Lagerung in einem Gleitlager, das ein aus Kunststoff gefertigtes Formteil, insbesondere ein Spritzguss-Formteil, umfasst wobei am Formteil eine elektrische Funktionsschaltung mit Sensorfunktion angeordnet ist. Diese Funktionsschaltung kann zur Erfassung eines Betriebsparameters dienen, insbesondere des Gleitelements selbst, wie beispielsweise der Erkennung von übermäßigem Verschleiß zwecks prädiktiver Wartung. Das Gleitelement hat dabei eine Gleitfläche zur Gleitlagerung und/oder beweglichen Führung bzw. Lagerung von zwei Teilen eines Gleitlagers relativ zueinander.

Ein derartiges Gleitelement ist bereits aus der Patentanmeldung WO 2017/182662 A1 der Anmelderin vorbekannt. Hierbei hat das Gleitelement eine Funktionsschaltung mit einem Detektor, der bei einem vorbestimmten Ausmaß von Verschleiß in einem kritischen Bereich seine elektrischen Eigenschaften verändert, beispielsweise durch Leiterunterbrechung. Die Funktionsschaltung ermöglicht es, die verschleißbedingte Veränderung, insbesondere drahtlos mittels eines Transponders zu erkennen.

In fertigungstechnischer Hinsicht wird in WO 2017/182662 A1 vorgeschlagen, das Detektorelement in einer Aussparung an der Gleitfläche anzuordnen. Als Detektor wird z.B. ein vorhandener oder angepasster Bestandteil eines folienartigen RFID-Transponders vorgeschlagen. Weiterhin wird als Detektorelement eine getrennte Komponente vorgeschlagen, die mit einem handelsüblichen RFID-Transponder verbunden wird, z.B. ein Nebenschluss-Leiter. In beiden Fällen kann der Detektor nach Anbringen in einem zusätzlichen Prozessschritt eingebettet bzw. gekapselt werden. Wie genau die Funktionsschaltung, insbesondere der Detektor, hergestellt werden soll lässt WO 2017/182662 A1 jedoch noch offen. WO 2017/182662 A offenbart ein Kunststoff-Gleitelement nach dem Oberbegriff des Anspruchs 1.

Die Kombination von Kunststoffbauteilen in komplexen Geometrien mit integrierter Sensorik bereitet in der Praxis jedoch einige Schwierigkeiten. Eine Integration von Sensorfunktionen in Kunststoff-Gleitelemente unterschiedlichster Geometrien gestaltet sich somit in vielen Fällen recht schwierig.

Eine erste Aufgabe der vorliegenden Erfindung besteht mithin darin, ein Kunststoff-Gleitelement vorzuschlagen, welches auch in großen Stückzahlen kostengünstig und zuverlässig mit einer elektrischen Funktionsschaltung zur sensorischen Erfassung eines Betriebsparameters ausgerüstet werden kann.

Diese Aufgabe wird gelöst durch ein Kunststoff-Gleitelement mit den Merkmalen nach Anspruch 1. Vorteilhafte Ausführungsformen sind Gegenstand der abhängigen Ansprüche.

Erfindungsgemäß wird bei einem Kunststoff-Gleitelement gemäß dem Oberbegriff aus Anspruch 1 vorgeschlagen, dass die Funktionsschaltung mindestens eine Leiterbahnstruktur umfasst, die auf dem Formteil aus Kunststoff ausgebildet ist, wobei das Formteil selbst den Träger bzw. das Substrat für die Leiterbahnstruktur bildet. Die Funktionsschaltung ist durch ein additives Fertigungsverfahren auf dem Formteil aufgebracht (Engl.: applied) sein. Dabei ist das Formteil an sich bevorzugt, aber nicht zwingend bereits vorgefertigt, wenn die Funktionsschaltung aufgebracht wird.

Die vorgeschlagene Bauweise hat u.a. den Vorteil, dass preiswert herstellbare Sensorik mit den gewünschten Eigenschaften unmittelbar in die Formteile integriert werden kann, d.h. der Automatisierungsgrad erhöht wird bzw. zusätzliche Fertigungsschritte entfallen können.

Das Gleitelement mit dem Formteil kann dabei ein Teil des gelagerten Lagerteils oder aber des lagernden Lagerteils (mechanisches Gestell) darstellen, d.h. ob es lagernd wirkt oder gelagert ist unerheblich. Ein Gleitelement im vorliegenden Sinne dient insbesondere zur gleitenden Lagerung von und/oder an einem Gleitpartner im montierten Zustand in einem Gleitlager.

Unter Leiterbahn (Engl. "trace conductor") wird vorliegend ein einzelnes elektrisch leitendes Verbindungselement verstanden. Als Bahn wird ein Bauteil mit beliebiger Länge bei vorgegebener Breite und vorgegebener Dicke (Bauhöhe), wobei die Dicke der Bahn im Verhältnis zu ihrer Breite deutlich kleiner ist, insbesondere um mindestens einen Faktor zwei, üblicherweise um ca. eine Größenordnung. Es handelt sich also um Verbindungselemente, typisch in flächiger Bauweise, mit Geometrien, ähnlich wie Leiterbahnen die bei Leiterplatten (Engl. "printed circuit board") üblich sind.

Das Formteil kann insbesondere vorgefertigt sein bzw. bereits vor dem Aufbringen der Leiterbahnstruktur bzw. der Funktionsschaltung vorhanden sein. Dadurch kann das Formteil selbst als Schaltungsträger bzw. Substrat für die Leiterbahnstruktur genutzt werden. Herkömmliche Leiterplatten bzw. PCBs sind damit nicht erforderlich.

Die erfindungsgemäße Leiterbahnstruktur kann durch unterschiedliche Techniken aufgebracht (Engl. applied) werden, bspw. durch Auftragen eines Leitlacks auf das vorgefertigte Formteil hergestellt sein und/oder bspw. durch 3D-Druck auf das Formteil aufgedruckt sein. Bevorzugt wird die gesamte Funktionsschaltung, zumindest aber die Leiterbahnstruktur, direkt bzw. unmittelbar auf das vorgefertigte Kunststoffteil aufgebracht, insbesondere aufgedruckt.

Die Funktionsschaltung kann bspw. durch ein additiv metallisierendes Verfahren auf das Formteil aufgebracht werden, indem ein Metall auf einen metallisierbaren Kunststoff galvanisch aufgebracht wird, oder auch durch thermisches Auftragen z.B. Spritzen.

Die erfindungsgemäße Funktionsschaltung kann allgemein durch ein additives Fertigungsverfahren auf das Formteil aus Kunststoff aufgebracht bzw. aufgetragen sein.

Dies kann insbesondere mithilfe einer geeigneten MID-Technologie (Engl. Molded Interconnect Devices) erfolgen, insbesondere einer additiven MID-Technologie, welche vorliegend als ein bevorzugtes Beispiel eines AM-Verfahren verstanden wird.

Die Funktionsschaltung kann auch durch andere geeignete, an sich bekannte AM-Verfahren angebracht werden, insbesondere durch ein im Sinne der Norm VDI 3405 oder DIN EN ISO 17296-2 (Teil II) als additives Fertigungsverfahren bezeichnetes Verfahren.

AM-Verfahren erlauben inhärent automatisierte, computergestützte Fertigung von komplexen, quasi beliebigen Geometrien, typische auf Basis einer schichtweise aufgetragenen Konstruktion. Als AM-Verfahren kommen z.B. insbesondere auch Direkt-Druck mit selbsttätiger Aushärtung der Druckmasse oder auch 3D-Druck durch Polymerisation, 3D-Druck durch Verkleben, 3D-Druck durch Sintern/Verschmelzen usw. in Betracht.

Die Funktionsschaltung kann dabei vollständig bzw. integral, insbesondere ohne sonstige diskrete elektrische Komponenten, in einem zusammenhängenden additiven Fertigungsprozess hergestellt sein. Geeignet sind dazu insbesondere extrusionsbasierte Verfahren (englisch: extrusion based: EB), entweder mit chemischer Aushärtung oder mit physikalischer Verfestigung von erhitzten thermoplastischen Kunststoffen. Als geeignet wird z.B. auch das FDM-Verfahren (englisch: fused deposition modeling) gesehen. Auch denkbar sind MJ-Verfahren (englisch: material jetting), z.B. mit Photopolymeren die durch Lichteinwirkung verfestigten. Ebenfalls in Betracht kommen sog. BJ-Verfahren (englisch: binder jetting), gelegentlich auch als 3DP-Verfahren bezeichnet.

In Betracht kommen neben MID-Verfahren auch grundsätzlich alle sogenannten 3D-Drucktechniken. Bevorzugt sind EB-Verfahren aufgrund ihrer Eignung für relativ zähflüssige, leitfähige Pasten. Insbesondere ein FLM- bzw. ein FFF-Verfahren zur additiven Fertigung wird dabei bevorzugt.

Die Funktionsschaltung kann aber auch durch In-Mold-Labeling aufgebracht werden, bzw. durch Einlegen einer bedruckten Folie in ein Spritzgießwerkzeug und Hinterspritzen mit dem Kunststoff. Die Funktionsschaltung kann ferner durch Heißprägen (Aufbringen einer haftenden Folie unter Druck und Wärme) angebracht werden.

Unter Funktionsschaltung wird vorliegend auch ein Fragment bzw. ein funktionaler Teil eines Schaltkreises (Engl. "circuit") verstanden. Die Funktionsschaltung kann also insbesondere erst durch Verbindung mit einer weiteren Schaltung ihre eigentliche Funktion erfüllen und muss daher für sich genommen insbesondere keinen Stromkreis bilden. Die Funktionsschaltung kann z.B. einen elektrischen Zweipol bilden, dessen elektrische Eigenschaften von dem zu erfassenden Betriebsparameter abhängen. Das Formteil wiederum kann im Spritzgussverfahren aus Kunststoff hergestellt, insbesondere vorgefertigt, werden.

Das Formteil des Gleitelements oder aber das gesamte Gleitelement ist vorzugsweise aus einem Tribopolymer hergestellt, insbesondere im Spritzgussverfahren. Unter Tribopolymer wird insbesondere ein Polymer mit Zusätzen zur schmiermittelfreien Lagerung, insbesondere Festschmierstoffen, verstanden. Jedenfalls wird ein tribologisch optimierter Kunststoff als Material des Formteils bevorzugt.

In einer bevorzugten Ausführungsform ist das Formteil, welches die Gleitfläche in vorbestimmter bzw. bekannter Geometrie definiert, vorgefertigt, insbesondere einteilig vorgefertigt. Das Formteil kann dabei unmittelbar als Substrat bzw. Schaltungsträger für die additiv aufgebrachte bzw. aufgedruckte Funktionsschaltung dienen, insbesondere als spritzgegossene Schaltungsträger.

Es kann vorteilhaft sein eine Zwischenschicht zwischen dem Formteil und der additiv aufgedruckten bzw. aufgetragenen Funktionsschaltung vorzusehen, etwa zur Haftungsvermittlung oder zwecks zusätzlicher elektrischer Isolierung. Viele Tribopolymere haben naturgemäß zwecks Verringerung der Haft- und/oder Gleitreibung relativ ungünstige Haftungseigenschaften.

Die Leiterbahnstruktur bzw. die Funktionsschaltung kann auf dem Formteil ausgebildet sein, insbesondere an einer Oberfläche des Formteils, unmittelbar hierauf oder mit einer zwischenliegenden Zwischenschicht. Die Leiterbahnstruktur bzw. die Funktionsschaltung muss jedoch nicht an der Oberfläche des fertigen Gleitelements direkt zugängig sein, sie kann in dem fertigen Gleitelement zum besseren Schutz durch eine oder mehrere Schutzschichten teilweise oder vollständig bedeckt oder z.B. ummantelt sein. Die Schutzschichten bzw. Kapselung kann bspw. durch Umspritzen hergestellt sein. Vorzugsweise wird bei drahtgebundener Signalverbindung zwecks Kontaktierung eine Zugangsöffnung zur Schaltung freigelassen bzw. ausgespart oder aber eine Kontaktvorrichtung mit eingekapselt.

Ein Vorteil der erfindungsgemäßen Lösung ist die relativ günstige Herstellung bei dennoch robuster Bauweise, die auch für widrige Umgebungsbedingungen, wie z.B. Verwendung im Freien geeignet ist.

Das Formteil kann ein Thermoplast umfassen oder im Wesentlichen aus einem Thermoplast hergestellt sein. Dem Kunststoff können ggf. auch Metallverbindungen beigemischt sein, was z.B. für die LDS Herstellmethode für MIDs vorteilhaft ist.

Vorzugsweise ist die Funktionsschaltung durch eine stoffschlüssige Verbindung fest mit dem Formteil verbunden. Die Funktionsschaltung ist vorzugsweise in das Formteil integriert bzw. liegt nach der Herstellung als integraler Bestandteil des Formteils vor, d.h. insbesondere als ein Bestandteil der nicht zerstörungsfrei abgetrennt werden kann.

In bevorzugter Weiterbildung umfasst die Funktionsschaltung zumindest einen Detektionsbereich, der zwecks Sensorfunktion bezüglich des zu überwachenden Betriebsparameters sensitiv ist.

Bevorzugt hat die Funktionsschaltung mindestens zwei Kontaktbereiche zwecks lösbarer, drahtgebundener Kontaktierung der Funktionsschaltung insbesondere des Detektors, mit einer getrennt ausgeführten Schaltung zur Auswertung eines elektrischen Signals des Detektors. Hierdurch kann das Gleitelement einfach ausgetauscht werden und hat trotz der Sensorfunktion recht geringe Herstellungskosten. Vorzugsweise wird die Funktionsschaltung über eine Kontaktvorrichtung mit lösbarer elektrischer Verbindung, wie eine Steckverbindung oder dgl., mit der weiteren Schaltung verbunden.

Ein Vorteil von additiven Verfahren, wie z.B. MID-Verfahren oder AM-Verfahren, besteht darin, dass ausgeprägte Kontaktbereiche zur elektrischen Verbindung in einem Prozessschritt zusammen mit sonstigen Bestandteilen, insbesondere Leiterbahnen, hergestellt werden können.

Als Detektionsbereich kommt grundsätzlich eine beliebige Detektorkomponente bzw. Detektorstruktur in Betracht, die vorzugsweise integral während der additiven Fertigung der Funktionsschaltung hergestellt wird.

Es kann sich dabei insbesondere um einen resistiven Detektionsbereich zur Verschleißerkennung, beispielsweise durch Leitungsunterbrechung, handeln. Dabei kann eine einfache elektrische Widerstandsmessung zur Verschleißanzeige genutzt werden. Auch induktiv oder kapazitiv wirkende Funktionsschaltungen z.B. zur Näherungserkennung, Positionsbestimmung oder dgl. liegen im Rahmen der Erfindung. Denkbar sind ferner auch andere Detektionskonzepte, beispielsweise zur Temperaturmessung oder zur Verformungs- bzw. Kraftmessung. Mit Detektor bzw. Detektionsbereich ist insbesondere der Aufnehmer im Sinne der Messtechnik (vgl. DIN 1319-1) bezeichnet, d.h. der Teil der Einrichtung, der auf die gewünschte Messgröße bzw. zu erfassende Größe unmittelbar anspricht.

Der Detektionsbereich der Funktionsschaltung kann zumindest in einem Neuzustand des Gleitelements einen vordefinierten Abstand zur Gleitfläche des Formteils aufweisen. Der Detektionsbereich ist allgemein in einer vordefinierten Position und insbesondere mit der gesamten betrachteten Funktionsschaltung dauerfest bzw. unlösbar an dem Formteil angeordnet.

Der Detektionsbereich kann insbesondere auf einer der Gleitfläche gegenüberliegenden Oberfläche des Formteils vorgesehen sein, insbesondere in die Oberfläche integriert sein.

Bei einer Ausführungsform kann der Detektionsbereich zumindest teilweise entlang einer zu erkennenden Verschleißgrenze verlaufen, sodass ein Überschreiten der Verschleißgrenze durch die Funktionsschaltung detektierbar ist.

Für eine möglichst großflächige Erfassung am Gleitelement kann ergänzend oder alternativ vorgesehen sein, dass die Funktionsschaltung, insbesondere der Detektionsbereich, über zumindest einen überwiegenden Anteil des Umfangswinkels bzw. der Axiallänge der Gleitfläche des Gleitelements verläuft, je nachdem ob es sich um ein Axial- und/oder Radiallager handelt.

Die additive Fertigung der Funktionsschaltung kann vereinfacht werden, wenn das Formteil an einer Oberfläche, eine Aussparungsstruktur aufweist, in welcher die endfertige Funktionsschaltung zumindest teilweise oder bevorzugt vollständig einliegt bzw. eingelassen ist. Durch Ausnutzung einer beispielsweise im Spritzgussverfahren mit geringen Toleranzen herstellbaren Aussparungsstruktur, können Ungenauigkeiten additiver Fertigung, z.B. durch Zerfließen des noch nicht ausgehärteten Leitermaterial reduziert bzw. kompensiert werden. Besonders bevorzugt wird die Aussparungsstruktur gegenüberliegend der eigentlichen Gleitfläche im vorgefertigten Formteil vorgesehen, um bestehende Anforderungen bzw. Spezifikationen bekannter Gleitelemente nicht zu beeinträchtigen. Der Zugang für eine additive Fertigung wird vereinfacht, wenn die Aussparungsstruktur für die Funktionsschaltung an einer konvexen Oberfläche des Formteils vorgesehen wird.

Das vorzugsweise vollständige Aufnehmen der Funktionsschaltung in einer Aussparungsstruktur bietet u.a. den Vorteil, dass ein mit Sensorfunktion erweitertes Gleitelement weiterhin abwärtskompatibel zur Bauteilgeometrie eines bestehende bzw. bereits in Serie gefertigten Gleitelements bleibt.

Die Aussparungsstruktur kann nach additiver Fertigung der Funktionsschaltung nach Außen offenbleiben, oder zum besseren Schutz gegen Umwelteinflüsse anschließend gekapselt bzw. ummantelt werden, ggf. im Rahmen der additiven Fertigung.

In einem zu Verschleißerkennung besonders geeigneten Ausführungsbeispiel umfasst die Aussparungsstruktur eine Vertiefung die zumindest bereichsweise in einem Abstand zur eigentlichen Gleitfläche so angeordnet ist, dass der Verlauf der Vertiefung einer zu erkennenden Verschleißgrenze entspricht. Der Abstand kann einem zu erkennenden Abnutzungsgrad des Gleitelements entsprechen. Die Funktionsschaltung, insbesondere der Detektionsbereich, ist vorzugsweise zumindest teilweise innerhalb einer Vertiefung an der Oberfläche des Formteils angeordnet.

Die Funktionsschaltung ist vorzugsweise direkt und/oder integral auf das vorgefertigte Formteil aufgetragen, z.B. durch ein MID-Verfahren. Die Funktionsschaltung ist somit mit dem Formteil vorzugsweise stoffschlüssig verbunden.

Die Funktionsschaltung ist vorzugsweise aus einem Material gefertigt, das eine deutlich höhere Leitfähigkeit aufweist, als der Kunststoff des Formteils, insbesondere aus einem Material mit Silber-, Kupfer- und/oder Carbon-Anteil. So kann die Funktionsschaltung direkt auf dem Formteil aufgetragen sein, auch ohne zusätzlichen Isolierschichten zwischen dem Körper des Formteils und der Leiterbahnstruktur der Funktionsschaltung.

Zur Herstellung elektrisch leitfähiger Strukturen im Wege der additiven Fertigung sind bereits unterschiedliche Materialien bekannt. Es können beispielsweise Leitlacke oder andere druckbare Pasten, Flüssigkeiten oder Thermoplaste mit Silberanteil, Kupferanteil und/oder Carbonanteil (beispielsweise Graphit oder Industrieruß bzw. CB="Carbon Black") eingesetzt werden. Vorzugsweise wird eine silberbasierte, leitfähige Paste eingesetzt, wie beispielsweise ein Flüssigharz mit Silberpulver, wie z.B. Typ 5064H der Fa. DuPont^{®} vom (siehe Datenblatt MCM5064H/2011). Auch andere Mischungen einer Polymermatrix mit leitfähigen Partikeln, insbesondere preiswertere Carbon-Partikel (Graphit oder CB) kommen in Betracht, sofern das endfertige Material der Leiterbahnen der Funktionsschaltung eine deutlich höhere Leitfähigkeit aufweist, als der Kunststoff bzw. Tribopolymer des Formteils.

In bevorzugter Ausführungsform umfasst die Leiterbahnstruktur Leiterbahnen, die z.B. durch ein AM-Verfahren additiv aufgebracht sind, und die eine erste Schichtdicke aufweisen, vorzugsweise eine erste Schichtdicke von ≤200µm, besonders bevorzugt von ≤100µm, beispielsweise im Bereich von etwa 5-50 µm, bei einer Leiterbreite von 0,5-5mm; sowie besondere Kontaktbereiche zur lösbaren Kontaktierung,. Die Kontaktbereiche weisen eine zweite Schichtdicke auf, welche gegenüber der erste Schichtdicke deutlich grösser ist, insbesondere eine zweite Schichtdicke von ≥200µm, beispielsweise im Bereich von 250-500µm. Mit der ggf. toleranzbehafteten Schichtdicke ist hiermit die Materialdicke der Leiterbahn(en) bzw. Kontaktbereiche in der Ebene senkrecht zu deren Längen- bzw. Breitenerstreckung bezeichnet. Hierbei sind die Leiterbahnen und Kontaktbereiche vorzugsweise in demselben Fertigungsverfahren auf das Kunststoff-Formteil aufgebracht, insbesondere additiv aufgebracht.

Alternativ oder ergänzend können zur Kontaktierung ausgeprägte leitfähige Kontaktmittel, z.B. Kontaktstifte, Kontaktbuchsen oder dgl. am Gleitelement vorgesehen werden. Dabei können die Kontaktmittel, z.B. beim additivem Auftragen, mit der Leiterbahnstruktur verbunden werden und eine lösbare elektrische Kontaktierung von außen ermöglichen, z.B. durch Steckverbinder. Das Integrieren von Kontaktmitteln wird bevorzugt mit einer Ummantelung kombiniert, welche zugleich die Kontaktmittel mechanisch befestigen kann. In Verbindung mit solchen Kontaktmitteln kann auch eine vollständige Kapselung der aufgebrachten Leiterbahnstruktur erzielt werden.

Die additiv gefertigte Funktionsschaltung ist vorzugsweise rein passiv, d.h. ohne eigene Energiequelle ausgeführt. Sie kann insbesondere als Zweipol ausgeführt sein, der an eine separate Auswerteschaltung über die Kontaktbereiche anzuschließen ist. Die Funktionsschaltung kann insbesondere ausschließlich aus Leiterbahnen und den Kontaktbereichen bestehen bzw. ohne diskrete elektrische bzw. elektronische Komponenten ausgeführt sein. Auch diese besonders einfache Gestaltung erlaubt z.B. eine resistive Verschleißerkennung, insbesondere durch resistive Überwachung einer Unterbrechung der Leiterbahnstruktur in der Funktionsschaltung.

Im Rahmen der additiven Fertigung können jedoch auch andersartige Detektoren bzw. Sensoren im Sinne von Messgrößen-Aufnehmern hergestellt werden. So kann beispielsweise auch eine kapazitive oder temperaturempfindliche Sensorstruktur additiv aufgebracht werden. Auch piezo-resistive Strukturen wurden bereits in der jüngeren Fachliteratur zu AM-Verfahren beschrieben. Ein piezo-resistiver Detektor der im AM-Verfahren herstellbar ist, wurde beispielsweise von Leigh SJ, Bradley RJ, et al. ("A Simple, Low-Cost Conductive Composite Material for 3D Printing of Electronic Sensors"; PLoS ONE 7(11); 2012).

Die Kombination von in bekannter Art und Weise hergestellten Gleitlagerteilen, insbesondere Spritzgussformteilen, mit additiver Fertigung bzw. direktem Drucken von elektrischen Schaltungen zeigt sich besonders vorteilhaft, wenn das Formteil aus einem Tribopolymer vorgefertigt ist. Tribopolymere zur schmiermittelfreien Lagerung sind an sich bekannt und umfassen typischerweise ein Basispolymer und mikroskopische Festschmierstoffe. Weiterhin kann das Tribopolymer Verstärkungsfasern und/oder Verstärkungsfüllstoffe oder sonstige Füllstoffe aufweisen. Ein geeigneter Werkstoff ist z.B. ein Tribopolymer aus der Produktreihe iglidur^{®} der Firma igus GmbH, D-51147 Köln. Diese Art von Gleitelementen ist bestimmungsgemäß einem gewissen Verschleiß des Basispolymers ausgesetzt, der die festen Schmierstoffpartikel zur Feststoffschmierung mit dem Lagerpartner freisetzen soll. Dementsprechend ist eine Verschleißerkennung hier besonders vorteilhaft, welche sich günstig im additiven Fertigungsverfahren realisieren lässt.

In einer weiteren Ausführungsform kann das Gleitelement eine Ummantelung zur Stabilisierung des Formteils aufweisen. Diese Ummantelung kann auf das Formteil aus Kunststoff, auf der die Leiterbahnstruktur ausgebildet ist, aufgebracht sein. Die Ummantelung kann insbesondere durch ein Umspritzen des Formteils und der Leiterbahnstruktur mit einem weiteren Kunststoff, sodass zugleich eine äußere Schutzschicht für die Funktionsschaltung auf dem Gleitelement entsteht. Das Material der Ummantelung kann dabei vorzugsweise einen hochfesten Kunststoff umfassen, der höhere mechanische Festigkeit aufweist, als der Kunststoff des Formteils, das die Gleitfläche bereitstellt. Der Kunststoff der Ummantelung ist vorzugsweise faserverstärkt, insbesondere mit einem deutlich größeren Faseranteil als der Kunststoff des Gleitelements bzw. des Formteils. Gleitelemente mit stabilisierender Ummantelung, sind insbesondere für die Lagerung von schweren Lasten vorteilhaft. Die Ummantelung bedeckt die Außenseite des Formteils vorzugsweise zumindest überwiegend, ggf. mit einer oder mehreren Aussparungen z.B. zur Kontaktierung.

Ein Kunststoff-Gleitelement mit Sensorfunktion gemäß einem der vorstehenden Ausführungsbeispiele eignet sich speziell für Gleitlager zur schmiermittelfreien Lagerung, bspw. für Linear-Gleitlager, Radial-Gleitlager, Axial-Gleitlager und/oder Radial-/Axialgleitlager.

Das Gleitlager kann dabei an einem ersten Lagerteil mindestens ein derartiges Gleitelement aufweisen. Dieses dient zur beweglichen Führung relativ zu einem zweiten Lagerteil in an sich für Gleitlager bekannter Bauweise. Das Lagerteil mit dem bzw. den Gleitelementen kann dabei entweder das gelagerte Lagerteil oder aber das lagernde Lagerteil (mechanisches Gestell) darstellen. Hierauf kommt es für die Erfindung nicht an. Ebenso können die vorgeschlagenen Gleitelemente für beliebige Lagertypen im mechanischen Sinne, beispielsweise Radiallager, Axiallager oder kombinierte Axial-/Radiallager usw. eingesetzt werden.

Bevorzugte Weiterbildung des Gleitlagers insgesamt ist am ersten Lagerteil räumlich getrennt vom Gleitelement, ggf. auch vom Gleitlager, eine Auswerteschaltung vorgesehen, mit welcher die Funktionsschaltung des Gleitelements lösbar bzw. austauschbar zur Signalübertragung über eine Leitung verbunden ist. Hierzu kann beispielsweise eine spezielle Kontaktschnittstelle zwischen Auswerteschaltung und Funktionsschaltung vorgesehen sein.

Eine entsprechende Kontaktvorrichtung, die über eine Leitung mit der Auswerteschaltung verbunden ist, kann beispielsweise an einem Gehäuseteil des ersten Lagerteils vorgesehen sein, welches das mindestens eine Gleitelement hält.

Das Gehäuseteil kann einen Durchbruch bzw. eine Öffnung, Bohrung oder dgl. aufweisen, der/die von einer Oberfläche des Gehäuseteils zu dem darin gehaltenen Gleitelement führt, sodass die Kontaktbereiche der Leiterbahnstruktur kontaktiert werden können und drahtgebunden über eine Leitung mit der Auswerteschaltung verbunden werden können.

Die Kontaktvorrichtung kann insbesondere Federkontaktstifte zur lösbaren Kontaktierung zwischen der Auswerteschaltung und der Funktionsschaltung, insbesondere deren Kontaktbereichen, aufweisen, um einen Austausch des Gleitelements zu erleichtern. Durch eine Schnittstelle zur lösbaren Kontaktierung mit dem bzw. den Gleitelementen können die in der Herstellung aufwendigeren bzw. kostspieligeren Komponenten von den Gleitelementen getrennt, an einem nicht verschleißanfälligen Teil des Gleitlagers angeordnet werden.

Die Kontaktvorrichtung kann weiterhin zur Lagesicherung des Gleitelements ausgeführt sein, beispielsweise zur axialen und/oder radialen Lagesicherung des Gleitelements. Dies kann insbesondere durch geeignete Gehäusegestaltung erreicht werden, sodass mit der elektrischen Kontaktierung zugleich eine mechanische Arretierung erfolgt.

Je nach Gleitlageranwendung kann das erste Lagerteil beispielsweise als Lagergehäuse bzw. Lagerschlitten ausgeführt sein. Das erste Lagerteil kann jedoch auch z.B. eine Lageraufnahme für ein als Lagerbuchse ausgeführtes Gleitelement sein.

Am ersten Lagerteil kann ein Modul angebracht sein, das die Auswerteschaltung sowie eine Energieversorgung, beispielsweise eine Batterie für die Auswerteschaltung, umfasst.

In einer Weiterbildung, insbesondere für Linearführungen, ist vorgesehen, dass das erste Lagerteil mit der Auswerteschaltung mehrere Gleitelemente mit jeweiliger Funktionsschaltung umfasst. Jedes der Gleitelemente kann austauschbar bzw. lösbar mit der Auswerteschaltung elektrisch verbunden sein, so dass mehrere Gleitelemente mit derselben Auswerteschaltung überwacht werden. Die Auswerteschaltung wertet mindestens einen Betriebsparameter, beispielsweise den Zustand bzw. elektrischen Widerstand einer einfachen Leiterschlaufe als Funktionsschaltung aus. Gemäß WO 2017/182662 A1 kann z.B. durch Überwachung verschleißbedingter Leiterunterbrechung eine wertvolle Information über den Betriebszustand des Gleitlagers bzw. Gleitelements gewonnen werden.

Die Auswerteschaltung kann weiterhin ein Kommunikationsmodul, insbesondere ein Funkkommunikationsmodul, umfassen, das zur Übermittlung eines Auswertungsergebnisses an ein übergeordnetes Überwachungssystem eingerichtet ist. Hierzu können beliebige drahtgebundene oder drahtlose Technologien zur Datenübertragung eingesetzt werden.

Das vorgeschlagene Gleitelement bzw. Gleitlager eignet sich insbesondere zur Verwendung in einer schmiermittelfreien Lineargleitführung, aber auch für eine Vielzahl anderer Gleitlager, z.B. für Gleitlagerbuchsen zur schmierfreien Radiallagerung.

Weitere Einzelheiten, Merkmale und Vorteile ergeben sich - ohne Beschränkung der Allgemeinheit der vorstehenden Lehre - aus der nachfolgenden Beschreibung bevorzugter Ausführungsbeispiele anhand der beiliegenden Abbildungen. Hierbei zeigen:
**FIG.1A-1B****:** perspektivische Ansichten eines Kunststoff-Gleitelements mit einer elektrischen Funktionsschaltung mit Sensorfunktion zur Erfassung eines Betriebsparameters;
**FIG.2A-2B****:** perspektivische Ansichten einer Kontaktvorrichtung zur lösbaren Kontaktierung der Funktionsschaltung am Gleitelement nach FIG.1A-1B;
**FIG.3****:** eine perspektivische Ansicht eines Lagerschlittens für eine Linearführung mit mehreren Gleitelementen nach FIG.1A-1B und Kontaktvorrichtungen nach FIG.2A-2B, sowie einem Modul mit einer Auswerteschaltung und einer Energieversorgung, in z.T. explodierter Darstellung;
**FIG.4A-4C****:** Ansichten eines Kunststoff-Gleitelements nach einem zweiten Ausführungsbeispiel mit integrierter elektrischer Funktionsschaltung, hier für ein Radiallager, im Längsschnitt (FIG.4A),in Frontansicht (FIG.4B) und Teilvergrößerung des Längsschnitts (FIG.4C: entsprechend C aus FIG.4A); und
**FIG.5A-5B****:** zwei Funktionsschaltungen integriert in einem Kunststoff-Formteil für ein Radiallager, z.B. nach FIG.4A-4C, jeweils in perspektivischer Ansicht.

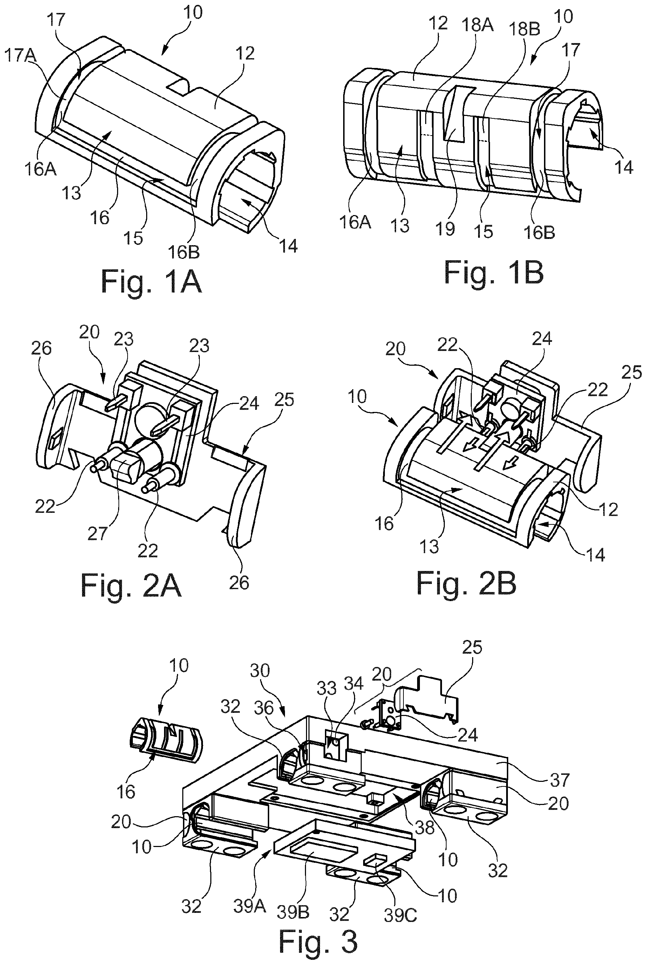

Das rein beispielhaft in FIG.1A-1B gezeigte Gleitelement, allgemein mit 10 bezeichnet, umfasst als Hauptbestandteil ein Formteil 12 das im Spritzgussverfahren aus einem Tribopolymer vorgefertigt ist, z.B. aus einem Tribopolymer vom Typ iglidur^{®} der Firma igus GmbH, D-51147 Köln. Das Formteil 12 bildet eine innenliegende Gleitfläche 14 zur beweglichen Führung und gleitenden Relativlagerung von zwei Lagerteilen. Die konkave Gleitfläche 14 ist in FIG.1A-1B im Wesentlichen zylindrisch gestaltet bspw. zur linearen Gleitführung an einer Profilschiene mit im Querschnitt rundem Führungsprofil, z.B. an einer Doppelschiene aus Metall (nicht gezeigt) vom Typ drylin^{®} W der Fa. igus GmbH. Auch andere Profilquerschnitte des Formteils 12 liegen im Rahmen der Erfindung. Die für die Führung relevante Geometrie und Bauweise des Gleitelements 10 kann z.B. der Lehre aus WO 97/40281 A1, der Lehre aus US 7,217,034 B2 bzw. DE 20 2004 016 094 U1 oder auch aus DE 20 2016 101 698 U1 entsprechen, deren diesbezüglich Lehren zur Verkürzung hier einbezogen werden.

An der zur Gleitfläche 14 gegenüberliegenden Außenfläche 13 des Gleitelements 10 ist eine im Spritzgussverfahren Aussparungsstruktur 15 vorgefertigt. Die Aussparungsstruktur 15 bildet eine zusammenhängende Vertiefung gegenüber der Außenfläche 13 mit einer hier gleichbleibenden Tiefe in Bezug auf die Kontur bzw. Umhüllende der Außenfläche 13. Der Fußpunkt bzw. Boden der Aussparungsstruktur 15 liegt in einem gleichbleibenden Abstand zur gegenüberliegenden Gleitfläche 14. Die vorbestimmte Tiefe entspricht einer nominalen Verschleiß-Grenze bezogen auf die abnutzende Gleitfläche 14, bei deren Erreichen das Gleitelement 10 ausgetauscht werden sollte. Die gewünschte Tiefe lässt sich im Spritzgussverfahren präzise einstellen. Hinsichtlich der Verschleißgrenze wird z.B. auf die Lehre aus WO 2017/182662 A1 verwiesen. Der Querschnitt der Aussparungsstruktur 15 kann rechteckig oder quadratisch bspw. mit einer Seitenlänge von ca. 0,5-1mm sein.

In der Aussparungsstruktur 15 an der konvexen Außenfläche 13 ist eine elektrische Funktionsschaltung 16 eingebracht, welche den Boden der Aussparungsstruktur 15 hier vollständig ausfüllt bzw. belegt. Die Aussparungsstruktur 15 und damit die Funktionsschaltung 16 verläuft im Beispiel aus FIG.1A-1B in mehreren mäanderförmigen bzw. U-förmigen Schleifen und über einen überwiegenden Anteil des wirksamen Umfangswinkels und auch der wirksamen Axiallänge der Gleitfläche 14 mit insbesondere zwei endseitigen Ringabschnitten 16A, 16B, welche bis auf einen Randbereich dem Gesamtumfang der Gleitfläche 14 entsprechen. Die gewählte Topologie der Aussparungsstruktur 15 bzw. Funktionsschaltung 16 soll eine möglichst gute Abdeckung von erfahrungsgemäß verschleißkritischen Teilbereichen der Gleitfläche 14 für alle Einbaulagen erzielen, was typisch von der Art des Gleitelements 10 und dessen Anwendung abhängt.

Im Ausführungsbeispiel nach FIG.1-3 soll die Funktionsschaltung 16 als Betriebsparameter den fortschreitenden Verschleiß, welcher die nützliche Wandstärke des Gleitelements 10 reduziert, erfassen. Hierzu besteht die Funktionsschaltung 16 hier lediglich aus der mäanderförmig angeordneten Leiterschleife, welche als verschleiß-sensitiver Detektor 17 zur Erfassung einer verschleißbedingten Unterbrechung der Leiterschleife dient, sowie zwei Kontaktbereichen 18A, 18B an den offenen Enden dieser Leiterschleife. Die Kontaktbereiche 18A, 18B dienen zur austauschbaren Kontaktierung, wie zu FIG.2A-2B unten erläutert. Die Funktionsschaltung 16 ist somit rein passiv, weist keine ausgeprägten elektrischen Komponenten (Widerstände, Kondensatoren, Spulen) auf und kann so mit geringen Herstellungskosten erzeugt werden.

Erfindungsgemäß wird die Funktionsschaltung 16 in geeigneter Technik unmittelbar innerhalb der Aussparungsstruktur 15 auf das Formteil 12 aufgebracht, z.B. in MID-Technologie oder durch Direkt-Drucken bzw. ein geeignetes AM-Verfahren, z.B. ein EB-Verfahren. Die Funktionsschaltung 16, d.h. hier die Leiterschleife aus Leiterbahnen 17A bzw. der Detektor 17 und die Kontaktbereiche 18A, 18B können somit direkt und integral in einem Prozess-Schritt aufgetragen werden. Die leitenden Strukturen der Funktionsschaltung 16 können z.B. aus geeigneter druckfähiger Silber-Paste oder einem Thermoplast mit geeignetem Carbon-Anteil hergestellt werden. Nach Aushärtung soll die Detektorstruktur 17 bzw. Leiterbahn 17A eine um eine Mehrfaches höhere Leitfähigkeit aufweisen, als das Tribopolymer des Formteils 12. Bei Bedarf kann zunächst ein Haftungsvermittler, ebenfalls in entsprechender Druck- bzw. AM-Technik, auf den Boden der Aussparungsstruktur 15 aufgetragen werden.

Zum zuverlässigen Kontaktieren sollten die Kontaktbereiche 18A, 18B eine größere Schichtdicke, etwa im Bereich von 250-400µm, im Vergleich zu etwa von 5-50pm für die sonstigen Leiterbahnen 17A der Leiterbahn-Topologie des Detektors 17 aufweisen. Die Leiterbreite der Leiterbahn(en) 17A, welche den Detektor 17 bilden, entspricht der vordefinierten Breite der Aussparungsstruktur 15, z.B. etwa 500µm bis hin zu wenigen Millimetern, je nach Abmessungen des Gleitelements 10.

FIG.2A-2B zeigen eine Kontaktvorrichtung 20, welche den Austausch des Gleitelements 10 vereinfacht. Die Kontaktvorrichtung 20 umfasst zwei Federkontaktstifte bzw. Druckfederkontakte 22 zur elektrischen Kontaktierung der endseitigen Kontaktbereiche 18A, 18B der Funktionsschaltung 16 auf dem Gleitelement 10 (durch Pfeile in FIG.2B veranschaulicht). Die Federkontaktstifte 22 sind mit zusätzlichen Steckerstiften 23 auf einer Leiterplatte 24 angebracht und mit diesen jeweils leitend verbunden. Die Steckerstifte 23 dienen zur Steckverbindung mit Verbindungsleitungen einer Auswerteschaltung 39B (FIG.3). Die Leiterplatte 24 ist an einem deckelartigen Halter 25 befestigt, der als Spritzgussformteil hergestellt ist und zwei Haltearme 26 zur Befestigung aufweist. Der Halter 25 umfasst ferner einen Sicherungszapfen 27 der in eine Sicherungsnut 19 am Gleitelement 10 (vgl. FIG.1B und FIG.2B) zur axialen Lagesicherung des Gleitelements 10 eingreift.

FIG.3 zeigt einen Führungsschlitten 30 als gelagertes Lagerteil einer Lineargleitführung mit z.B. vier baugleichen Gleitelementen 10 nach FIG.1A-1B zur Gleitlagerung an einer Doppelprofilschiene. Es kann ggf. auch nur ein als Indikator dienendes Gleitelement 10 nach FIG.1A-1B mit drei herkömmlichen Gleitelement eingesetzt werden. Die Gleitelemente 10 sind jeweils in einem separaten Gehäuselager 32 aufgenommen, das eckseitig an einer Schlittenplatte 37 des Führungsschlittens 30 angebracht ist. Die Schlittenplatte 37 dient zur Montage am zu führenden Maschinenteil. Zumindest ein oder mehrere Gleitelemente 10 haben eine Funktionsschaltung 16 (FIG.1A-1B) die anhand einer zugeordneten Kontaktvorrichtung 20 (FIG.2A-2B) elektrisch kontaktiert ist. Die Kontaktvorrichtungen 20 sind in entsprechenden Aufnahmen 33 angeordnet und anhand der Haltearme 26 mit stirnseitigen Rastöffnungen 35 des jeweiligen Gehäuselagers 32 werkzeugfrei verrastbar. In der Schlittenplatte 37 sind zu jeder Aufnahme 33 Leitungskanäle 34 mit Steckbuchsen eingearbeitet bzw. vorgesehen, in welchen eine jeweilige Verbindungleitung für die entsprechende Funktionsschaltung 16 geführt wird. Die Kontaktierung der Druckfederkontakte 22 und Steckerstifte 23 erfolgt beim Verrasten der Kontaktvorrichtung 20.

An der Unterseite des Führungsschlittens 30 ist eine Aufnahme 38 vorgesehen, in welcher ein elektronisches Modul 39A zum Anschluss der Funktionsschaltungen 16 über die jeweilige Kontaktvorrichtungen 20 vorgesehen ist. Das Modul 39A umfasst eine gemeinsame Auswerteschaltung 39B, z.B. mit einem Mikroprozessor, und eine Batterie 39C zur Energieversorgung. Anhand der Kontaktvorrichtungen 20 können die Gleitelemente 10 bei Erreichen der Lebensdauer leicht ausgetauscht werden, insbesondere ohne Eingriff am Modul 39A.

Die Auswerteschaltung 39B überwacht dabei zumindest den Verschleißzustand der Gleitelemente 10 über die angeschlossenen Funktionsschaltungen 16. Erreicht der Abrieb eines Gleitelements 10 die vorbestimmte Verschleißgrenze wird die Detektorstruktur 17 durchtrennt bzw. deren Widerstand erhöht. Die Auswerteschaltung 39B erfasst, ob der mit der Funktionsschaltungen 16 gebildete Stromkreis unterbrochen wird bzw. der elektrische Widerstand stark ansteigt und erkennt dadurch das Erreichen der Verschleißgrenze.

Die Auswerteschaltung 39B kann zudem weitere Betriebsparameter des Gleitlagers wie z.B. Beschleunigungs-, Temperatur-, Feuchtigkeitswerte erfassen. Die Auswerteschaltung 39B umfasst ein Kommunikationsmodul (nicht separat gezeigt) zur Datenübermittlung von Sensordaten bzw. Auswertungsergebnissen an ein übergeordnetes Überwachungssystem, z.B. über ein geeignetes Protokoll zur Funkkommunikation. Hinsichtlich geeigneter Kommunikationstechnik wird zur Verkürzung bspw. auf die Lehre aus WO 2018/115528 A1, insbesondere zu den dortigen FIG.8-9 verwiesen.

Auf die Lagerbauform des Gleitlagers und somit des Kunststoff-Gleitelements kommt es grundsätzlich nicht an. Gleitelemente mit erfindungsgemäß integrierter Sensorik sind besonders vorteilhaft, in Anwendungen mit hohen Belastungen d.h. starkem Verschleiß und/oder in denen prädiktive bzw. zustandsorientierte Instandhaltung wünschenswert ist.

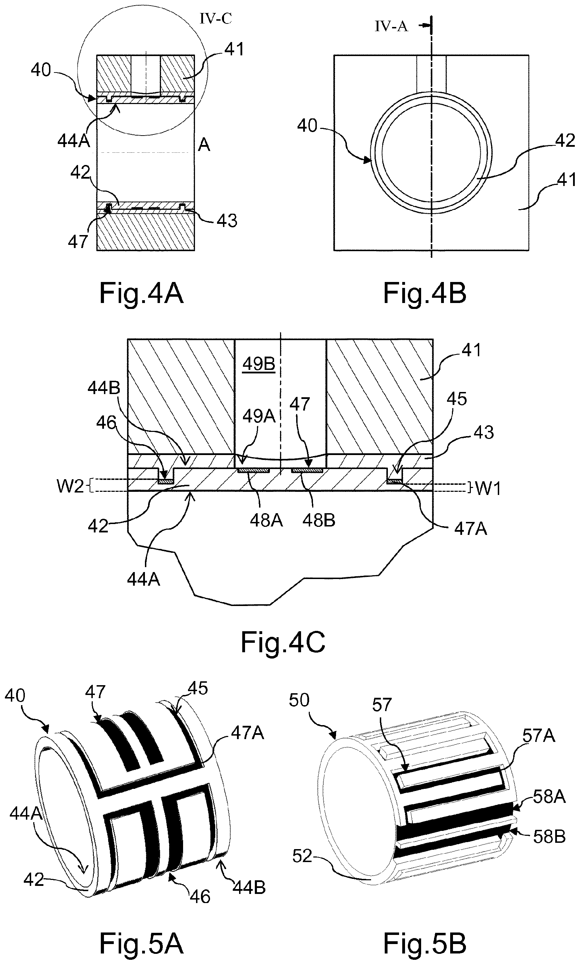

FIG.4A-4C zeigen als weiteres Ausführungsbeispiel ein Gleitelement 40 für ein Radiallager, hier als Gleitlagerbuchse ausgeführt. Das Gleitelement 40 umfasst als Hauptbestandteil ein Formteil 42 das in Spritzgusstechnik aus einem Tribopolymer vorgefertigt ist, z.B. vom Typ iglidur^{®} der Firma igus GmbH, D-51147 Köln.

Das Formteil 42 bildet eine innenliegende kreiszylindrische Gleitfläche 44A, symmetrisch zur Achse A und um diese geschlossen, zur schmierfreien Radiallagerung eines nicht gezeigten Bauteils, z.B. einer drehbaren Metallwelle. Zu letzterem ist das Tribopolymer des Formteils 42 für geringe Reibwerte passend gewählt, je nach gewünschter Lagerpaarung bzw. Gleitpaarung. Als optionalen Zusatzbestandteil hat das einstückige Gleitelement 40 hier einen versteifenden Außenmantel 43 aus einem anderen, vorzugsweise festeren Kunststoff, der durch Umspritzen des vorgefertigten Formteils 42 an der äußerer Oberfläche 44B des Formteils 42 vorgesehen ist. In FIG.4A-4C ist der Außenmantel 43 vollständig um die Achse A umlaufend, und kann ggf. auch die axialen Stirnflächen des Formteils 42 (hier nicht gezeigt) umgreifen. Der Außenmantel 43 kann aus hochfestem Kunststoff hergestellt sein und eine die mechanische Steifigkeit bzw. Festigkeit erhöhende Ummantelung, z.B. für hohe Belastungen > 100MPa, bilden. Der Außenmantel 43 ist mit dem Formteil 42 stoffschlüssig bzw. untrennbar zu einem Teil bzw. einstückig verbunden. Das Gleitelement 40 kann z.B. im Mehrkomponenten-Verfahren hergestellt sein.

In FIG.4A-4C ist das Gleitelement 40 mit dem inneren Formteil 42 und dem Außenmantel 43 insgesamt im Wesentlichen zylindrisch und einteilig ausgeführt. Das Gleitelement 40 ist als lagerndes Bauteil in eine passende Aufnahme eines Lagerteils 41 (Gestell) eingesetzt, z.B. eingepasst oder eingepresst. Das Lagerteil 41 in FIG.4A-4C nur teilweise und rein schematisch als Quader gezeigt.

An der zur konkaven Gleitfläche 44A gegenüberliegenden Oberfläche 44B hat das Formteil 42 eine Aussparungsstruktur 45, die als zusammenhängende Vertiefung in der konvexen Oberfläche 44B vorgefertigt ist. In die Aussparungsstruktur 45 ist, nach einem Prinzip analog zu FIG.1-3, auch in FIG.4A-4C eine elektrische Funktionsschaltung 46 eingebracht, welche aus einer Struktur aus Leiterbahnen 47A besteht und z.B. den Boden der Aussparungsstruktur 45 vollständig überdeckt bzw. ausfüllt. Die Funktionsschaltung 46 verläuft so, dass die Struktur 47 aus Leiterbahnen 47A einen Detektor zur Verschleiß-Anzeige bildet und zumindest die empirisch als kritisch bekannten Bereiche des Formteils 42 erfasst, z.B. in Schleifen über im Wesentlichen den gesamten wirksamen Umfangswinkel um die Achse A und/oder die gesamte wirksame Axiallänge der Gleitfläche 44A. Die Leiterbahnen 47A sind dabei an der äußeren Fläche des Formteils 42 ausgebildet, welches als Träger dient.

Der Fußpunkt bzw. Boden der Aussparungsstruktur 45 liegt in gleichbleibendem Abstand zur gegenüberliegenden Gleitfläche 44A, welche einer ersten nominalen Verschleißschwelle W1 entspricht, die sich beim vorgefertigten Formteil 42 im Spritzgussverfahren relativ präzise einstellen lässt. Bei zunehmender Abnutzung der Gleitfläche 44A über die vordefinierte Verschleißschwelle W1 hinaus sollte das Gleitelement 40 ausgetauscht werden, bleibt jedoch funktionsfähig mindestens bis zur zweiten Verschleißschwelle W2 (FIG.4C). Der Querschnitt der Aussparungsstruktur 45 kann z.B. rechteckig oder quadratisch bspw. mit einer Seitenlänge von ca. 0,5-1mm sein, wie in FIG.4C veranschaulicht.

Der Außenmantel 43 nach FIG.4A-4C dient zugleich als Schutz der Funktionsschaltung 46 und als mechanisches Widerlager für die Leiterbahnstruktur 47 nach radial Außen, so dass diese u.a. nicht ungewollt vom Formteil 42 ablösen kann.

FIG.5A-5B zeigen, je nach Belastung geeignete Verläufe von Leiterbahnstrukturen 47 bzw. 57 am Formteil 42 bzw. 52, hier ohne optionale, bevorzugte Ummantelung. Das Gleitelement 40 aus FIG.5A entspricht FIG.4A-4C und zeigt eine Leiterbahnstruktur 47 mit überwiegend umfänglichen Verlauf um die Achse A, d.h. in FIG.5A sind die Richtungskomponenten der Leiterbahnstruktur 47 überwiegend umlaufend um die Achse A (jeweils in Vektorbetrachtung) . Der Detektor bzw. die Leiterbahnstruktur 47 aus FIG.4A-4C hat, wie FIG.5A zeigt, eine nach innen umgelenkte bzw. verschachtelte Leiterschlaufe die einen Zweipol ausgehend von zwei ggf. verstärkten Kontaktbereichen 48A, 48B zur drahtgebundenen Kontaktierung bildet, ähnlich FIG.1A-1B.

FIG.5B zeigt einen alternativen Verlauf einer Leiterbahnstruktur 57, nämlich mäanderförmig überwiegend axial in Richtung der Achse A, jedoch auch über den Gesamtumfang erstreckt. Die Leiterbahnstruktur 57 bildet auch einen Zweipol ausgehend von Kontaktbereichen 58A, 58B. Auch andere Geometrien als die gezeigten sind je nach Hauptlast geeignet und möglich, z.B. etwa sinusförmig (in Abwicklung der Umfangsfläche betrachtet), einfach ringförmig umlaufend usw.

Die auf das Formteil 42; 52 des Gleitelements 40; 50 aufgebrachte Leiterbahnstruktur 47; 57 dient jeweils als Detektor bzw. Anzeige für das Überschreiten der Verschleißgrenze W1 im Betrieb. Bei fortschreitendem Verschleiß des Gleitelements 40; 50 wird mindestens eine der Leiterbahnen 47A, 57A durch Abrieb abgenutzt bzw. beschädigt, d.h. der elektrische Widerstand steigt messbar an. Dies kann entsprechend FIG.1-3 signaltechnisch einfach erfasst werden, etwa durch Messung von Spannung, Strom, Widerstand oder Leitwert, z.B. durch eine Auswerteschaltung (vgl. FIG.3, 39B), die entsprechend ein Signal schaltet bzw. Nachricht ausgibt, die anzeigt, dass das Gleitelement 40; 50 getauscht werden sollte. Dabei kann zunächst eine auftretende Verringerung des Widerstands der Funktionsschaltung 46 das Erreichen der Verschleißgrenze W1 anzeigen und eine Unterbrechung der Leiterbahnstruktur 47 das Erreichen der Verschleißgrenze W2 anzeigen.

Durch eine radiale Durchgangsöffnung 49A im Außenmantel 43 und eine fluchtende Durchgangsöffnung 49B im Lagerteil 41, z.B. eine Bohrung, sind die Kontaktbereichen 48A, 48B bzw. 58A, 58B von außen zugänglich. Die drahtgebundene, lösbare Verbindung bzw. Kontaktierung mit den Kontaktbereichen 48A, 48B bzw. 58A, 58B zum Signalabgriff wird durch die Durchgangsöffnungen 49A, 49B hergestellt. Hierzu ist vorzugsweise eine geeignete Kontaktvorrichtung ähnlich FIG.2A-2B, jedoch mit zwei federbelasteten Kontaktstiften 22 in die Durchgangsöffnungen 49A, 49B eingesetzt, sodass das Gleitelement 40, 50 in Axialrichtung A, vorzugsweise ohne Entfernen der Kontaktvorrichtung, austauschbar ist und die Kontaktierung selbsttätig löst bzw. wiederhergestellt wird. Vorzugsweise ist eine gemeinsame radiale Durchgangsöffnung 49A für beide Kontaktbereiche 48A, 48B im Außenmantel 43 vorgefertigt und etwa mittig in Bezug auf die axiale Baulänge des Gleitelements 40, 50 bzw. der Lagerbuchse vorgesehen. Die Durchgangsöffnungen 49A, 49B haben bevorzugt gleichen Durchmesser und können zusammen mit der Kontaktvorrichtung (nicht gezeigt) auch hier der Axialsicherung dienen.

Die Funktionsschaltung 46 mit Leiterbahnstruktur 47; 57 und Kontaktbereichen 48A, 48B bzw. 58A, 58B kann prozesstechnisch mittels verschiedenen geeigneten Prozessen auf das Formteil 42; 52 aufgebracht bzw. in dieses integriert werden. Bevorzugt werden automatisierte Prozesse, z.B. MID-Herstellungsverfahren, 3D-Druck, In-Mold-Labeling, usw. Anschließend kann optional und eine teilweise oder zumindest überwiegende schützende Kapselung (Durchgangsöffnung 49A ausgenommen) erfolgen, z.B. durch separates Umspritzen, oder auch im Zuge des 3D-Drucks. Die Funktionsschaltung 46 in FIG.4A-4C ist rein passiv. Auch elektrische Komponenten wie Widerstände, Kondensatoren, Spulen, ICs, usw. können zur Erfassung eines anderen Betriebsparameters vorgesehen werden. Dann ist ggf. eine Herstellung in MID-Technik vorteilhaft, wobei auch durch einen mit dem Formteil einstückigen Außenmantel gekapselt werden kann. Weitere Merkmale der Kunststoff-Gleitelemente 40; 50, insbesondere bzgl. Signalauswertung z.B. durch eine Auswerteschaltung 39B, können FIG.1-3 entsprechen.

Alternativ oder ergänzend zur verschleißanzeigenden Sensorik können somit Funktionsschaltungen mit einem andersartigen Detektor für einen zu überwachenden Betriebsparameter eingesetzt werden, z.B. Kraft, Temperatur, Einbaulage bzw. Relativposition usw.

Die Erfindung ermöglicht bestimmungsgemäß die Zustandsüberwachung von Gleitelementen bzw. damit ausgerüsteten Gleitlagern und hilft so z.B. ungeplante Ausfälle zu vermeiden, die Lebensdauer der Gleitelemente optimal auszunutzen und/oder Wartungskosten zu senken.

### Bezugszeichenliste

**FIG.1A-1B**
   - 10: Gleitelement
   - 12: Formteil
   - 13: Außenfläche
   - 14: Gleitfläche
   - 15: Aussparungsstruktur
   - 16: Funktionsschaltung
   - 16A, 16B: Ringabschnitt
   - 17: Detektor (Leiterbahnstruktur)
   - 17A: Leiterbahn
   - 18A, 18B: Kontaktbereiche
   - 19: Sicherungsnut
**FIG.2A-2B**
   - 10: Gleitelement
   - 12: Formteil
   - 13: Außenfläche
   - 14: Gleitfläche
   - 16: Funktionsschaltung
   - 20: Kontaktvorrichtung
   - 22: Federkontaktstift/Druckfederkontakt
   - 23: Steckerstift
   - 24: Leiterplatte
   - 25: Halter
   - 26: Haltearme
   - 27: Sicherungszapfen
**FIG. 3**
   - 10: Gleitelement
   - 16: Funktionsschaltung
   - 20: Kontaktvorrichtung
   - 30: Führungsschlitten
   - 32: Gehäuselager (für Gleitelement)
   - 33: Aufnahme (für Kontaktvorrichtung)
   - 34: Leitungskanal
   - 36: Rastöffnung
   - 37: Schlittenplatte
   - 38: Aufnahme (für Modul 39A)
   - 39A: Modul
   - 39B: Auswerteschaltung
   - 39C: Batterie
**FIG.4A-4C, FIG.5A**
   - 40: Gleitelement
   - 41: Lagerteil
   - 42: Formteil
   - 43: Außenmantel
   - 44A: Gleitfläche
   - 44B: äußere Oberfläche
   - 45: Aussparungsstruktur
   - 46: Funktionsschaltung
   - 47: Leiterbahnstruktur (hier Detektor)
   - 47A: Leiterbahn
   - 48A, 48B: Kontaktbereiche
   - 49A, 49B: Durchgangsöffnung
   - A: Lagerachse
   - W1, W2: Verschleißgrenze
**FIG.5B**
   - 50: Gleitelement
   - 52: Formteil
   - 57: Leiterbahnstruktur (hier Detektor)
   - 57A: Leiterbahn
   - 58A, 58B: Kontaktbereiche

## Patentansprüche

1. Kunststoff-Gleitelement (10; 40) zur schmiermittelfreien Lagerung in einem Gleitlager, wobei das Gleitelement (10; 49) ein aus Kunststoff gefertigtes, insbesondere im Spritzgussverfahren gefertigtes, Formteil (12; 42) umfasst, das eine Gleitfläche (14; 44A) zur beweglichen Führung von zwei Lagerteilen relativ zueinander aufweist, wobei
am Formteil (12; 42) eine elektrische Funktionsschaltung (16; 46) mit Sensorfunktion zur Erfassung eines Betriebsparameters angeordnet ist;
wobei die Funktionsschaltung (16; 46) mindestens eine Leiterbahnstruktur (17, 17A; 47, 47A) umfasst,
**dadurch gekennzeichnet, dass** die Leiterbahnstruktur (17, 17A; 47, 47A) auf dem Formteil (12) als Träger der Leiterbahnstruktur ausgebildet ist, wobei die Funktionsschaltung durch ein additives Fertigungsverfahren (AM-Verfahren) auf dem vorzugsweise vorgefertigten Formteil (12; 42) aus Kunststoff aufgebracht ist.

2. Gleitelement nach Anspruch 1, **dadurch gekennzeichnet, dass** das Formteil (12; 42) aus einem Tribopolymer vorgefertigt ist und als Schaltungsträger, insbesondere als spritzgegossener Schaltungsträger, für die Funktionsschaltung (16; 46) dient.

3. Gleitelement nach Anspruch 1 oder 2, **dadurch gekennzeichnet, dass**
(i) die Funktionsschaltung (16; 46) einen bzgl. des Betriebsparameters sensitiven Detektionsbereich (17; 47) umfasst, insbesondere **dadurch gekennzeichnet**,
(ii) der Detektionsbereich (17; 47) in einem Neuzustand des Gleitelements (10; 40) einen vordefinierten Abstand zur Gleitfläche (14; 44A) aufweist und/oder an einer der Gleitfläche (14; 44A) gegenüberliegenden Oberfläche (44B) des Formteils (12; 42) vorgesehen ist.

4. Gleitelement nach Anspruch 3, **dadurch gekennzeichnet, dass** der Detektionsbereich (17; 47) zumindest teilweise entlang einer zu erkennenden Verschleißgrenze (W1) verläuft, sodass ein Überschreiten der Verschleißgrenze (W1) durch die Funktionsschaltung detektierbar ist, und/oder der Detektionsbereich (17; 47) über zumindest einen überwiegenden Anteil des Umfangswinkels bzw. der Axiallänge der Gleitfläche (14; 44A) verläuft.

5. Gleitelement nach einem der vorstehenden Ansprüche, **dadurch gekennzeichnet, dass** das Formteil (12; 42) an einer Oberfläche (13; 44B), insbesondere gegenüberliegend der Gleitfläche (14; 44A), eine Aussparungsstruktur (15; 45) aufweist, in welcher die Funktionsschaltung (16; 46) zumindest teilweise oder vollständig einliegt, wobei die Oberfläche (13; 44B) vorzugsweise konvex ausgeführt ist, und wobei die Aussparungsstruktur (15; 45) bevorzugt eine Vertiefung umfasst, die zumindest bereichsweise in einem Abstand zur Gleitfläche (14; 44A) verläuft, der einem zu erkennenden Abnutzungsgrad des Gleitelements (10; 40) entspricht.

6. Gleitelement nach einem der vorstehenden Ansprüche, **dadurch gekennzeichnet, dass** die Leiterbahnstruktur (17, 17A; 47, 17A) auf das vorgefertigte Formteil (12; 42) direkt und/oder integral aufgetragen ist, vorzugsweise durch ein MID-Verfahren oder ein EB-Verfahren, und mit dem Formteil (12; 42) stoffschlüssig verbunden ist.

7. Gleitelement nach einem der vorstehenden Ansprüche, **dadurch gekennzeichnet, dass** die Leiterbahnstruktur (17, 17A; 47, 17A) aus einem Material gefertigt ist, das eine deutlich höhere Leitfähigkeit aufweist, als der Kunststoff des Formteils (12), insbesondere aus einem Material mit Silber-, Kupfer- und/oder Carbon-Anteil.

8. Gleitelement nach einem der vorstehenden Ansprüche, **dadurch gekennzeichnet, dass** die Leiterbahnstruktur (17, 17A; 47, 17A) Leiterbahnen (17A; 47A), vorzugsweise additiv aufgebrachte Leiterbahnen (17A; 47A), umfasst die eine erste Schichtdicke aufweisen, vorzugsweise eine erste Schichtdicke von ≤200µm, besonders bevorzugt von ≤100µm bei einer Leiterbreite von 0,5-5mm; sowie Kontaktbereiche (18A, 18B; 48A, 48B), vorzugsweise additiv aufgebrachte Kontaktbereiche zur lösbaren Kontaktierung, die eine zweite Schichtdicke aufweisen, welche gegenüber der erste Schichtdicke deutlich grösser ist, vorzugsweise eine zweite Schichtdicke von ≥220µm, insbesondere im Bereich von 250-500µm.

9. Gleitelement nach einem der vorstehenden Ansprüche, **dadurch gekennzeichnet, dass** die Funktionsschaltung (16; 46) passiv ausgeführt ist und insbesondere aus Leiterbahnen (17A; 47A) und Kontaktbereichen (18A, 18B; 48A, 48B) besteht und/oder zur resistiven Verschleißerkennung, insbesondere durch Leiterunterbrechung, dient.

10. Gleitelement nach einem der vorstehenden Ansprüche, **dadurch gekennzeichnet, dass** das Formteil (12; 42) ein Tribopolymer umfasst, insbesondere aus einem Tribopolymer vorgefertigt ist, der ein Basispolymer und Festschmierstoffe und vorzugsweise Verstärkungsfasern und/oder Füllstoffe aufweist.

11. Gleitelement nach einem der vorstehenden Ansprüche, **dadurch gekennzeichnet, dass** das Gleitelement eine Ummantelung (43) zur Stabilisierung des Formteils (42) aufweist, die auf das Formteil (42) aus Kunststoff, auf der die Leiterbahnstruktur ausgebildet ist, aufgebracht ist, insbesondere durch ein Umspritzen mit einem weiteren Kunststoff, vorzugsweise mit hochfestem Kunststoff.

12. Gleitlager, insbesondere Linear-Gleitlager und/oder Radial-Gleitlager, zur schmiermittelfreien Lagerung, mit einem ersten Lagerteil (30; 41) und einem zweiten Lagerteil, wobei das erste Lagerteil (30; 41) mindestens ein Gleitelement (10; 40) nach einem der Ansprüche 1 bis 11 umfasst, das zur beweglichen Führung des zweiten Lagerteils relativ zum ersten Lagerteil dient, **dadurch gekennzeichnet, dass**
am ersten Lagerteil (30; 41) eine Auswerteschaltung (39B) vorgesehen ist, welche mit der Funktionsschaltung (16; 46) an dem mindestens einen Gleitelement (10; 40) lösbar verbunden ist.

13. Gleitlager nach Anspruch 12, **dadurch gekennzeichnet, dass** das erste Lagerteil (30; 41) an einem das mindestens eine Gleitelement (10; 40) haltenden Gehäuseteil (32) eine mit der Auswerteschaltung (39B) verbundene Kontaktvorrichtung (20), insbesondere mit Federkontaktstiften (22), zur lösbaren Kontaktierung der Auswerteschaltung (39B) mit der Funktionsschaltung (16; 46) aufweist, wobei die Kontaktvorrichtung (20) bevorzugt einen Halter (25) zur Lagesicherung, insbesondere zur axialen und/oder radialen Lagesicherung, des Gleitelements (10) aufweist.

14. Gleitlager nach Anspruch 12 oder 13, **dadurch gekennzeichnet, dass** das erste Lagerteil als Lagergehäuse bzw. -schlitten (30) oder als Lagerbuchse (40) ausgeführt ist und ein daran angebrachtes Modul (39A) mit der Auswerteschaltung (39B) und mit einer Energieversorgung (39C) umfasst.

15. Gleitlager nach einem der Ansprüche 12 bis 14, **dadurch gekennzeichnet, dass** das erste Lagerteil (30) ein erstes Gleitelement (10) nach einem der Ansprüche 1 bis 11 umfasst und ein zweites Gleitelement (10) nach einem der Ansprüche 1 bis 11 umfasst, wobei die jeweilige Funktionsschaltung (16) des ersten und zweiten Gleitelements lösbar mit der Auswerteschaltung (39B) zur Signalübertragung verbunden sind.

16. Gleitlager nach einem der Ansprüche 12 bis 15, **dadurch gekennzeichnet, dass** die Auswerteschaltung (39B) mindestens einen Betriebsparameter anhand der Funktionsschaltung(en) (16) auswertet und ein Kommunikationsmodul umfasst, das zur Übermittlung eines Auswertungsergebnisses an ein übergeordnetes Überwachungssystem eingerichtet ist.

## Claims

1. A plastics sliding element (10; 40) for lubricant-free bearing in a plain bearing, wherein the sliding element (10; 49) comprises a formed part (12; 42) made of plastics, in particular made by injection molding, which has a sliding surface (14; 44A) for mobile guidance of two bearing parts relative to one another, wherein an electrical functional circuit (16; 46) with sensor function is arranged on the formed part (12; 42) for acquisition of an operating parameter;
wherein the functional circuit (16; 46) comprises at least one trace conductor pattern (17, 17A; 47, 47A), **characterized in that** the trace conductor pattern (17, 17A; 47, 47A) is formed on the formed part (12) as carrier of the trace conductor pattern, wherein the functional circuit is applied on the preferably prefabricated formed part (12; 42) of plastics by an additive manufacturing method (AM method).

2. The sliding element as claimed in claim 1, **characterized in that** the formed part (12; 42) is prefabricated from a tribopolymer and serves as a circuit carrier, in particular as an injection-molded circuit carrier, for the functional circuit (16; 46).

3. The sliding element as claimed in claim 1 or 2, **characterized in that** the functional circuit (16; 46) comprises a detection region (17; 47) sensitive with regard to the operating parameter, in particular **characterized in that** the detection region (17; 47) has, when the sliding element (10; 40) is new, a predefined distance from the sliding surface (14; 44A) and/or is provided on a surface (44B) of the formed part (12; 42) opposite the sliding surface (14; 44A).

4. The sliding element as claimed in claim 3, **characterized in that** the detection region (17; 47) extends at least in part along a wear limit (W1) to be detected, such that exceeding of the wear limit (W1) is detectable by the functional circuit, and/or the detection region (17; 47) extends over at least a majority of the circumferential angle or of the axial length of the sliding surface (14; 44A).

5. The sliding element as claimed in one of the preceding claims, **characterized in that** the formed part (12; 42) has a recessed pattern (15; 45) on one surface (13; 44B), in particular opposite the sliding surface (14; 44A), in which recessed pattern the functional circuit (16; 46) lies at least partly or fully, wherein the surface (13; 44B) is preferably of convex configuration, wherein the recessed pattern (15; 45) preferably comprises a recess which extends at least in areas at a distance from the sliding surface (14; 44A) which corresponds to a degree of wear of the sliding element (10; 40) to be detected.

6. The sliding element according to one of the preceding claims, **characterized in that** the trace conductor pattern (17, 17A; 47, 17A) is directly and/or integrally deposited onto the prefabricated formed part (12; 42), preferably by an MID method or an EB method, and is bonded to the formed part (12; 42) by a substance-to-substance bond.

7. The sliding element as claimed in one of the preceding claims, **characterized in that** the trace conductor pattern (17, 17A; 47, 17A) is made from a material which has a distinctly higher conductivity than the plastics material of the formed part (12), in particular from a material with a silver, copper and/or carbon content.

8. The sliding element as claimed in one of the preceding claims, **characterized in that** the trace conductor pattern (17, 17A; 47, 17A) comprises trace conductors (17A; 47A), preferably additively applied trace conductors (17A; 47A), which have a first layer thickness, preferably a first layer thickness of ≤200µm, particularly preferably of ≤100µm in the case of a conductor width of 0.5-5mm; and contact regions (18A, 18B; 48A, 48B), preferably additively applied contact regions for releasable contacting, which have a second layer thickness which is markedly greater than the first layer thickness, preferably a second layer thickness of ≥200µm, in particular in the range from 250-500µm.

9. The sliding element as claimed in one of the preceding claims, **characterized in that** the functional circuit (16; 46) is of passive configuration and in particular consists of trace conductors (17A; 47A) and contact regions (18A, 18B; 48A, 48B) and/or serves for resistive wear detection, in particular by conductor interruption.

10. The sliding element as claimed in one of the preceding claims, **characterized in that** the formed part (12; 42) comprises a tribopolymer, in particular is prefabricated from a tribopolymer, which has a base polymer and solid lubricants and preferably reinforcing fibers and/or fillers.

11. The sliding element as claimed in one of the preceding claims, **characterized in that** the sliding element has a sheathing (43) for stabilization of the formed part (42) which is applied onto the formed part (42) of plastics on which the trace conductor pattern is formed, in particular by overmolding with a further plastics material, preferably with high strength plastics material.

12. A plain bearing, in particular a linear plain bearing and/or radial plain bearing, for lubricant-free bearing, having a first bearing part (30; 41) and a second bearing part, wherein the first bearing part (30; 41) comprises at least one sliding element (10; 40) as claimed in one of claims 1 to 13, which serves for mobile guidance of the second bearing part relative to the first bearing part, **characterized in that** on the first bearing part (30; 41) an evaluation circuit (39B) is provided which is releasably connected with the functional circuit (16; 46) on the at least one sliding element (10; 40).

13. The plain bearing as claimed in claim 14, **characterized in that** the first bearing part (30; 41) has on a housing part (32) holding the at least one sliding element (10; 40) a contact device (20) connected to the evaluation circuit (39B), in particular with spring contact pins (22), for releasable contacting of the evaluation circuit (39B) with the functional circuit (16; 46), wherein the contact device (20) preferably has a holder (25) for positional securing, in particular for axial and/or radial positional securing, of the sliding element (10).

14. The plain bearing as claimed in claim 12 or 13, **characterized in that** the first bearing part is formed as a bearing housing or carriage (30) or of a bearing bush (40) and comprises a module (39A) attached thereto with the evaluation circuit (39B) and with a power supply (39C).

15. The plain bearing as claimed in one of claims 12 to 14, **characterized in that** the first bearing part (30) comprises a first sliding element (10) as claimed in one of claims 1 to 11 and a second sliding element (10) as claimed in one of claims 1 to 11, wherein the respective functional circuits (16) of the first and second sliding element are releasably connected with the evaluation circuit (39B) for signal transmission.

16. The plain bearing as claimed in one of claims 12 to 15, **characterized in that** the evaluation circuit (39B) evaluates at least one operating parameter on the basis of the functional circuit(s) (16) and comprises a communication module which is set up to transmit an evaluation result to a higher-level monitoring system.

## Revendications

1. Élément glissant en plastique (10; 40) pour le support sans lubrifiant dans un palier lisse, l'élément coulissant (10; 49) comprenant une pièce moulée (12; 42) fabriquée en matière plastique, en particulier par moulage par injection, qui présente une surface de glissement (14; 44A) pour le guidage mobile de deux pièces de palier l'une par rapport à l'autre, dans lequel
un circuit fonctionnel électrique (16; 46) avec une fonction de capteur est disposé sur la pièce moulée (12; 42) pour détecter un paramètre de fonctionnement;
le circuit fonctionnel (16; 46) comprenant au moins une structure de piste conductrice (17, 17A; 47, 47A),
**caractérisé en ce que** la structure de piste conductrice (17, 17A; 47, 47A) est réalisée sur la pièce moulée (12) en tant que support de la structure de piste conductrice, le circuit fonctionnel étant appliqué par un procédé de fabrication additive (procédé AM) sur la pièce moulée (12; 42) de préférence préfabriquée en matière plastique.

2. Élément glissant selon la revendication 1, **caractérisé en ce que** la pièce moulée (12; 42) est préfabriquée en un tribopolymère et sert de support de circuit, en particulier de support de circuit moulé par injection pour le circuit fonctionnel (16; 46).

3. Élément glissant selon la revendication 1 ou 2, **caractérisé en ce que**
(i) le circuit fonctionnel (16; 46) comprend une zone de détection (17; 47) sensible par rapport au paramètre de fonctionnement, caractérisé notamment **en ce que**
(ii) la zone de détection (17; 47) présente, dans un état neuf de l'élément coulissant (10; 40), une distance prédéfinie par rapport à la surface de glissement (14; 44A) et/ou qui est prévue sur une surface (44B) de la pièce moulée (12; 42) opposée à la surface de glissement (14; 44A).

4. Élément glissant selon la revendication 3, **caractérisé en ce que** la zone de détection (17; 47) s'étend au moins partiellement le long d'une limite d'usure (W1) à détecter, de sorte qu'un dépassement de la limite d'usure (W1) peut être détecté par le circuit fonctionnel, et/ou la zone de détection (17; 47) s'étend sur au moins une partie prépondérante de l'angle périphérique ou de la longueur axiale de la surface de glissement (14; 44A).

5. Élément glissant selon l'une des revendications précédentes, **caractérisé en ce que** la pièce moulée (12; 42) présente sur une surface (13; 44B), en particulier en face de la surface de glissement (14; 44A), une structure d'évidement (15; 45) dans laquelle le circuit fonctionnel (16; 46) est inséré au moins partiellement ou complètement, la surface (13; 44B) étant de préférence convexe et la structure d'évidement (15; 45) comprenant de préférence un creux qui s'étend au moins par zones à une distance de la surface de glissement (14; 44A) qui correspond à un degré d'usure à reconnaître de l'élément de glissement (10; 40).

6. Élément glissant selon l'une des revendications précédentes, **caractérisé en ce que** la structure de piste conductrice (17, 17A; 47, 17A) est appliquée directement et/ou intégralement sur la pièce moulée préfabriquée (12; 42), de préférence par un procédé MID ou un procédé EB, et est reliée à la pièce moulée (12; 42) par liaison de matière.

7. Élément glissant selon l'une des revendications précédentes, **caractérisé en ce que** la structure de piste conductrice (17, 17A; 47, 17A) est fabriquée dans un matériau qui présente une conductivité nettement supérieure à celle de la matière plastique de la pièce moulée (12), en particulier dans un matériau avec une proportion d'argent, de cuivre et/ou de carbone.

8. Élément glissant selon l'une des revendications précédentes, **caractérisé en ce que** la structure de pistes conductrices (17, 17A; 47, 17A) comprend des pistes conductrices (17A; 47A), de préférence des pistes conductrices appliquées par addition (17A; 47A), qui présentent une première épaisseur de couche, de préférence une première épaisseur de couche de ≥ 200 µm, de manière particulièrement préférée de ≤ 100 µm pour une largeur de conducteur de 0,5-5 mm; ainsi que des zones de contact (18A, 18B; 48A, 48B), de préférence des zones de contact appliquées par addition pour une mise en contact détachable, qui présentent une deuxième épaisseur de couche qui est nettement plus grande que la première épaisseur de couche, de préférence une deuxième épaisseur de couche de ≥ 200 µm, en particulier dans la plage de 250-500 µm.

9. Élément glissant selon l'une des revendications précédentes, **caractérisé en ce que** le circuit fonctionnel (16; 46) est réalisé de manière passive et se compose notamment de pistes conductrices (17A ; 47A) et de zones de contact (18A, 18B; 48A, 48B) et/ou sert à la détection résistive de l'usure, notamment par interruption du conducteur.

10. Élément glissant selon l'une des revendications précédentes, **caractérisé en ce que** la pièce moulée (12; 42) comprend un tribopolymère, en particulier est préfabriquée à partir d'un tribopolymère qui comprend un polymère de base et des lubrifiants solides et, de préférence, des fibres de renforcement et/ou des matières de remplissage.

11. Élément glissant selon l'une des revendications précédentes, **caractérisé en ce que** l'élément glissant présente un enrobage (43) pour stabiliser la pièce moulée (42), enrobage qui est appliqué sur la pièce moulée (42) en matière plastique sur lequel est formée la structure de piste conductrice, en particulier par un surmoulage avec une autre matière plastique, de préférence avec une matière plastique à haute résistance.

12. Palier lisse, en particulier palier lisse linéaire et/ou palier lisse radial, pour un support sans lubrifiant, comprenant une première pièce de palier (30; 41) et une deuxième pièce de palier, la première pièce de palier (30; 41) comprenant au moins un élément glissant (10; 40) selon l'une des revendications 1 à 11, qui sert au guidage mobile de la deuxième pièce de palier par rapport à la première pièce de palier, **caractérisé en ce qu**'un circuit d'évaluation (39B) est prévu sur la première pièce de palier (30; 41), lequel est relié de manière amovible au circuit fonctionnel (16; 46) sur l'au moins un élément glissant (10; 40).

13. Palier lisse selon la revendication 12, **caractérisé en ce que** la première pièce de palier (30; 41) comporte, sur une partie de boîtier (32) supportant ledit au moins un élément glissant (10; 40), un dispositif de contact (20) relié au circuit d'évaluation (39B), en particulier avec des broches de contact à ressort (22), pour la mise en contact amovible du circuit d'évaluation (39B) avec le circuit fonctionnel (16; 46), le dispositif de contact (20) présentant de préférence un support (25) pour le maintien de la position, en particulier pour le maintien de la position axiale et/ou radiale, de l'élément glissant (10).

14. Palier lisse selon la revendication 12 ou 13, **caractérisé en ce que** la première pièce du palier est réalisée sous la forme d'un logement ou d'un chariot de palier (30) ou d'un coussinet de palier (40) et comprend un module (39A) monté sur celui-ci avec le circuit d'évaluation (39B) et avec une alimentation en énergie (39C).

15. Palier lisse selon l'une des revendications 12 à 14,
**caractérisé en ce que** la première pièce de palier (30) comprend un premier élément glissant (10) selon l'une des revendications 1 à 11 et comprend un deuxième élément glissant (10) selon l'une des revendications 1 à 11, le circuit fonctionnel respectif (16) du premier et du deuxième élément glissant étant relié de manière amovible au circuit d'évaluation (39B) pour la transmission de signaux.

16. Palier lisse selon l'une des revendications 12 à 15,
**caractérisé en ce que** le circuit d'évaluation (39B) évalue au moins un paramètre de fonctionnement à l'aide du ou des circuits fonctionnels (16) et comprend un module de communication qui est conçu pour transmettre un résultat d'évaluation à un système de surveillance de niveau supérieur.
